**Europäisches Patentamt**

(19) **European Patent Office**

**Office européen des brevets**

(11) Veröffentlichungsnummer: **0 043 931**
**B1**

(12) # EUROPÄISCHE PATENTSCHRIFT

(45) Veröffentlichungstag der Patentschrift:
04.12.85

(21) Anmeldenummer: 81104683.8

(22) Anmeldetag: **19.06.81**

(51) Int. Cl.⁴: **H 02 B 1/20**

(54) **Verbindungsschienenblock.**

(30) Priorität: **01.07.80 DE 3024844**

(43) Veröffentlichungstag der Anmeldung:
**20.01.82 Patentblatt 82/3**

(45) Bekanntmachung des Hinweises auf die Patenterteilung:
**04.12.85 Patentblatt 85/49**

(84) Benannte Vertragsstaaten:
**AT BE CH FR GB IT LI NL SE**

(56) Entgegenhaltungen:
**DE - A - 1 930 515**
**DE - A - 2 600 805**

(73) Patentinhaber: **BROWN, BOVERI & CIE
Aktiengesellschaft, Kallstadter Strasse 1,
D-6800 Mannheim 31 (DE)**

(72) Erfinder: **Schmidt, Alfred, Unterer Erbsenbach 1,
D-6124 Beerfelden-Gammelsbach (DE)**

(74) Vertreter: **Kempe, Wolfgang, Dr. et al, c/o BROWN,
BOVERI & CIE AG Kallstadter Strasse 1,
D-6800 Mannheim-Käfertal (DE)**

## Beschreibung

Die Erfindung betrifft einen Verbindungsschienenblock zur Verbindung gleichphasiger elektrischer Installationsgeräte von Mehrphasenstromkreisen, welche Installationsgeräte in einer Verteilung nebeneinander aufgereiht sind, mit je einer Verbindungsschiene pro Phase, an der Anschlußfahnen angeformt sind, mit denen die einzelnen Verbindungsschienen mit den Installationsgeräten der zugehörigen Phase verbindbar sind, mit einem Mehrkammerisolierprofil, in dessen Kammern, die durch senkrecht am Boden des Isolierprofils angeformte Trennwände begrenzt sind, die einzelnen Verbindungsschienen eingesetzt sind, wobei die senkrecht abgewinkelten Anschlußfahnen aus den Kammern herausragen. Eine derartige Einrichtung ist aus der DE-U-7 806 981 bekannt.

Verbindungsschienen für aneinandergereihte elektrische Installationsgeräte, mit denen mehrere Geräte der gleichen Phase verbunden werden, sind bekannt. Für verschiedene Phasen werden einzelne Schienen verwendet, die gegeneinander isoliert sind.

Zum Beispiel ist ein Verbindungsschienenblock aus der DE-A-2 600 805 bekannt geworden, der ein Mehrkammerisolierprofil mit auf unterschiedlichen Höhen befindlichen Taschen aufweist. Eine Brückenbildung zwischen zwei benachbarten Verbindungsschienen beim Ablängen (Absägen) wird dadurch vermieden, daß Dopppeltrennwände zwischen den Verbindungsschienen vorgesehen sind. Jedoch ist das Mehrkammerisolierprofil wenig stabil.

Bei dem Verbindungsschienenblock nach der DE-U-7 806 981 werden die auf gleicher Höhe liegenden Verbindungsschienen ebenfalls gegeneinander isoliert geführt. Die Trennwände des Mehrkammerisolierprofils sind hierbei doppelwandig als geschlossenes Hohlprofil ausgebildet und schließen einen Luftspalt ein. Bei diesem Verbindungsschienenblock sind die Verbindungsschienen raumsparend angeordnet und können auch einfach installiert werden. Das Ablängen der Verbindungsschienen aller Phasen erfolgt gemeinsam, wobei der Isolierabstand zwischen den einzelnen Verbindungsschienen wegen der Doppeltrennwände ausreicht, um die Gefahr von Kurzschlußbrücken beim Ablängen zu vermeiden. Jedoch sind die Trennwände des bekannten Verbindungsschienenblockes wenig elastisch, so daß bei einer ungünstigen Toleranzlage das Einsetzen insbesondere der mittleren Verbindungsschiene erschwert ist. Darüber hinaus ist die Herstellung des vorgeschlagenen Hohlkammerprofils schwierig.

Der Erfindung liegt die Aufgabe zugrunde, einen Verbindungsschienenblock der eingangs genannten Art so weiterzubinden, daß dessen Herstellung vereinfacht ist und die Verbindungsschienen im Mehrkammerisolierprofil zuverlässig auch bei ungünstigen Toleranzen gehaltert sind.

Diese Aufgabe wird gemäß einer ersten Ausführungsform der Erfindung dadurch gelöst, daß jede Trennwand als Einfachwand ausgebildet und im Querschnitt so geformt ist, daß der Abstand der je eine Trennwand zwischen sich nehmenden, die Trennwand gerade beidseitig berührenden, senkrecht zu dem Boden verlaufenden Ebenen größer ist als die Wandstärke jeder Trennwand, dergestalt, daß die Verbindungsschienen auf einen Abstand zueinander gehalten sind, der größer ist als die Wandstärke jeder Trennwand.

Die Verbindungsschienen können in das Mehrkammerisolierprofil nur mittels Kraftaufwand eingedrückt werden, wobei die verformbaren elastischen Trennwände nachgeben. Sie üben jedoch auf die Verbindungsschienen durch die jeweiligen Anlageflächen einen Druck aus, durch den die Verbindungsschienen an einer Verschiebung oder gar am Herausfallen gehindert werden.

Eine vorteilhafte Weiterbildung der Erfindung kann darin bestehen, daß die freie Längskante jeder Trennwand einen hakenförmigen Querschnitt besitzt und das Hakenende wenigstens teilweise auf der nach außen weisenden Schmalseite einer Verbindungsschiene — diese in ihrer Lage festhaltend — aufliegt.

Die Trennwände können vorteilhaft zwei senkrecht zum Boden des Isolierprofils ausgerichtete, zueinander versetzte Wandbereiche aufweisen, die durch einen Schrägsteg untereinander verbunden sind.

Der schräge Verlauf des Verbindungssteges erleichtert bei der Montage das Einführen der Verbindungsschienen.

Durch eine Ausbildung der Trennwände mit einem wellen- oder zickzackförmigen Querschnitt kann eine hohe Klemmkraft zum Festhalten der Verbindungsschienen realisiert werden. In jedem Falle wird eine verbesserte Kühlung der Verbindungsschienen erreicht, weil diese nicht großflächig an den Trennwänden anliegen.

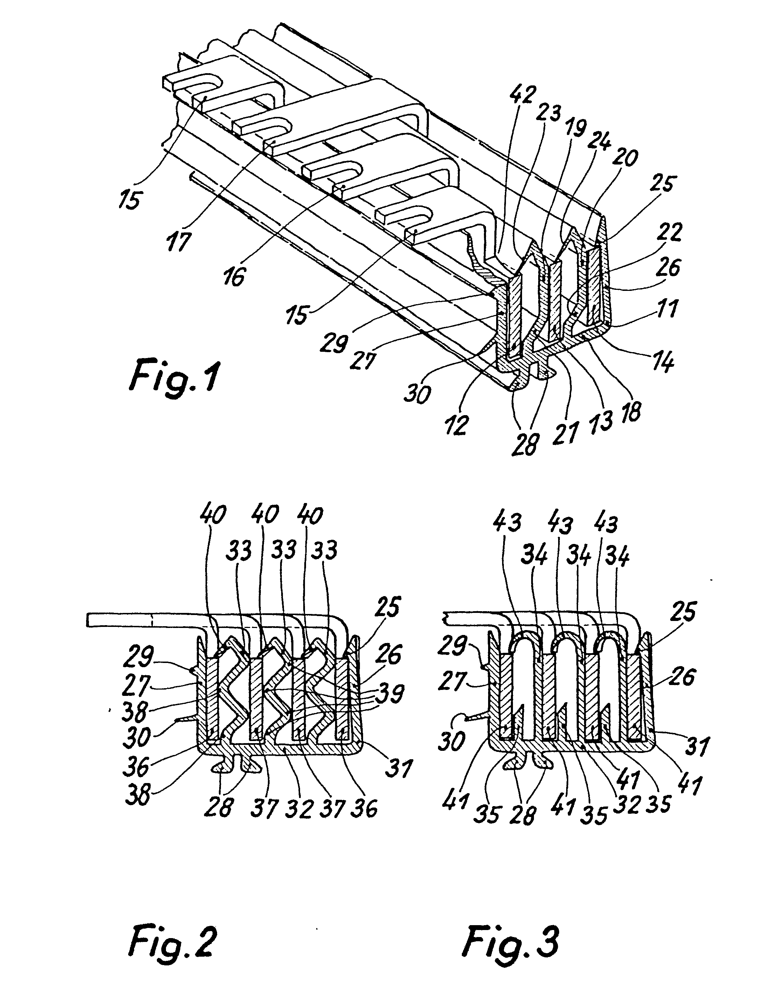

Eine zweite Ausführungsform der Erfindung besteht darin, daß am Boden des Isolierprofils zwischen dessen Seitenwänden ebene Trennwände alternierend mit niedrigen leistenförmigen Ansätzen angeformt sind, daß über den Querschnitt des Isolierprofils gesehen die Verbindungsschienen entweder zwischen der ersten Seitenwand und einem leistenförmigen Ansatz, einer Trennwand und einem leistenförmigen Ansatz oder einer Trennwand und der zweiten Seitenwand derart isoliert geführt sind, daß sie zu benachbarten Verbindungsschienen auf einem Abstand gehalten sind, der größer ist als die Wandstärke der Trennwände, und daß die freie Längskante jeder Trennwand hakenförmigen Querschnitt besitzt und das Hakenende wenigstens teilweise auf der nach außen weisenden Schmalseite einer Verbindungsschiene — diese in ihrer Lage festhaltend — aufliegt (Fig. 3).

Wenn die Stirnfläche jedes leistenförmigen Ansatzes zu der von ihm geführten Verbindungsschiene hin abgeschrägt ist, dann wird das Einsetzen der Verbindungsschienen sehr erleichtert.

Einer weiteren Ausgestaltung der Erfindung zur Folge kann die freie Längskante jeder Trennwand einen keilförmigen Querschnitt besitzen.

Es sind Ausgestaltungen des Verbindungsschienenblockes möglich, bei denen eine seitliche Abstützung der Verbindungsschienen und damit die Einhaltung des Abstandes zwischen zwei Verbindungsschienen ausschließlich durch die Seitenflächen der Trennwände nicht oder nur mangelhaft gewährleistet ist. Dies kann dann der Fall sein, wenn z. B. die erste senkrecht an der Kammerbodenwand angeformte Stufe sehr schmal ist, oder wenn die an der Bodenwand angeformte Leiste sehr kurz ist. In solchen Fällen besteht die Möglichkeit, das Isolierprofil so auszubilden, daß die freien Längskanten mit hakenförmigem Querschnitt auf jeder Trennwand durchgehend ausgebildet sind, so daß das Hakenende nicht nur auf der nach außen weisenden Schmalseite der Verbindungsschiene aufliegt, sondern auch seitlich gegen die Anschlußfahnen im Bereich von deren Anformung an die Verbindungsschiene drückt, und so eine Führung und Halterung auch im Bereich der Anschlußfahne bewirkt.

Beim Einlegen der Verbindungsschiene in das Mehrkammer-Isolierprofil wird zunächst das freie Ende der Trennwand etwas zur Seite gebogen und schnappt nach erfolgtem Einlegen über die nach außen weisende Schmalseite der Verbindungsschiene. Lediglich in den Bereichen der Verbindungsschiene, an denen die Anschlußlaschen angeformt sind, ist ein Überschnappen nicht möglich. Hier preßt sich das freie Ende der Trennwand elastisch gegen die Anschlußlasche.

Anhand der Zeichnung, in der mehrere Ausführungsbeispiele gezeigt sind, soll die Erfindung näher erläutert und beschrieben werden.

Es zeigt

Fig. 1 das Dreikammerprofil eines Verbindungsschienenblocks mit Trennwänden mit versetzten Wandbereichen,

Fig. 2 den Schnitt durch ein Vierkammerprofil eines Verbindungsschienenblocks mit Trennwänden mit wellenförmigem Querschnitt und

Fig. 3 den Schnitt durch ein Vierkammerprofil eines Verbindungsschienenblocks mit alternierend angeformten Trennwänden und leistenförmigen Ansätzen.

Die Fig. 1 zeigt einen Verbindungsschienenblock bestehend aus einem Mehrkammerisolierprofil mit drei Kammern, in das drei Verbindungsschienen 12, 13 und 14 mit ihren abgewinkelten Anschlußfahnen 15, 16 und 17 eingelegt sind. Das Mehrkammerisolierprofil 11 ist U-förmig aufgebaut. In seinem Inneren sind auf dem Boden 18 zwei Trennwände 19, 20 angeformt, deren versetzte Wandbereiche durch je einen Schrägsteg 21, 22 verbunden sind. Die freien Längskanten 23 und 24 der Trennwände 19 und 20 sind hakenförmig abgewinkelt, wobei die Haken keilförmig zulaufen. Zwischen der den Anschlußfahnen 15, 16 und 17 abgewandten Seitenwand 26 des U-förmigen Mehrkammerisolierprofils 11 und der benachbarten Trennwand 19 und 20 sowie zwischen den beiden Trennwänden 19 und 20 ist je eine Verbindungsschiene 12, 13 und 14 angeordnet. Diese Verbindungsschienen 12, 13 und 14 stützen sich an den Seitenwänden 26 und 27 sowie an den Trennwänden 19 und 20 ab. Sie liegen mit ihrer einen Kante auf dem Boden 18 auf und werden an ihrer anderen Kante, auf der nach außen weisenden Schmalseite durch die Längskanten 23 und 24 der Trennwände bzw. die Rastnase 25 der Seitenwand 26 abgestützt. An den Bereichen 42, an denen die Anschlußfahnen 15, 16 und 17 an den Verbindungsschienen 12, 13 und 14 angeformt sind, deformieren sich die Längskanten 23 und 24 bzw. die Rastnase 25, da das Mehrkammerisolierprofil aus einem elastischen Material hergestellt ist.

Die Montage der Verbindungsschienen 12, 13 und 14 in dem Mehrkammerisolierprofil 11 erfolgt derart, daß die Längskanten 23 und 24 der Trennwände bzw. die Rastnase 25 der Seitenwand vom Einlegen der Verbindungsschienen 12, 13 und 14 zurückgedrückt werden und nach Auflage der Verbindungsschienen 12, 13 und 14 auf dem Boden 18 über die nach außen liegenden Kanten der Verbindungsschienen 12, 13 und 14 greifen.

Durch diese Anordnung der Verbindungsschienen 12, 13 und 14 im Mehrkammerisolierprofil 11 ist bei sparsamer Verwendung von Isolierstoffmaterial ein hinreichend großer Isolierabstand zwischen den einzelnen Verbindungsschienen 12, 13 und 14 sichergestellt. Durch die vorhandenen Luftzwischenräume wird eine Brückenbildung durch Verschmieren des Schienenmaterials beim Ablängen vermieden.

An der Außenseite des Bodens 18 befinden sich zwei kurze zum Boden hin angeschrägte Leisten 28, die dem Aufschnappen auf eine nicht dargestellte Tragschiene dienen. Diese Tragschiene kann parallel zu einer Installationsgeräteschiene auf einer Grundplatte montiert werden. Auf der Außenseite der Seitenwand 27 des U-förmigen Mehrkammerisolierprofils 11, zu dem die abgewinkelten Anschlußfahnen 15, 16 und 17 weisen (also zur Seite der Installationsgeräte hin), befindet sich eine Distanzleiste 29 sowie eine Dichtungslippe 30. Die Distanzleiste 29 hat die Aufgabe, den Verbindungsschienenblock auf Distanz zu den Installationsgeräten zu halten, so daß ein Luftspalt zwischen Verbindungsschienenblock und Installationsgeräten entsteht. Dadurch wird vermieden, daß sich zwischen beiden Schwitzwasser sammeln kann. Die Dichtungslippe 30 ist so am Mehrkammerisolierprofil 11 angebracht, daß sie im montierten Zustand oberhalb der Auspuffkanäle der nicht dargestellten Installationsgeräte verläuft. Hierdurch ist sichergestellt, daß die aus den Installationsgeräten austretenden Lichtbogengase nicht in den Anschlußklemmbereich gelangen können.

Die Fig. 2 und 3 zeigen je einen Schnitt durch ein Vierkammerisolierprofil eines Verbindungsschienenblockes. Das Profil 31 besteht aus einem U-förmigen äußeren Mantel, welcher dem des Mehrkammerisolierprofils 11 der Fig. 1 gleicht. Auf der Innenseite des Bodens 32 sind der Fig. 2 zur Folge drei Trennwände 33 mit wellenförmigen Querschnitt und der Fig. 3 zur Folge drei ebene Trennwände 34 sowie drei kurze leistenförmige Ansätze 35 angeformt.

Die beiden äußeren Verbindungsschienen 36 in der Fig. 2 stützen sich einerseits an je einer Seitenwand 26, 27 des U-förmigen Mehrkammerisolierprofils 31 und andererseits an jeweils zwei Punkten 38 der benachbarten Trennwände 33 ab. Die mittleren beiden Verbindungsschienen 37 werden lediglich an den Berührungspunkten 39 durch die Trennwände 33 abgestützt. Wie in Fig. 1 weisen auch die wellenförmigen Trennwände 33 an ihren freien Längskanten 40 hakenförmigen Querschnitt auf, der zum Ende zu keilförmig zuläuft und dort auf den nach außen liegenden Kanten der Verbindungsschienen 36 und 37 aufliegt.

Die in der Fig. 3 dargestellten Verbindungsschienen 41 werden zwischen Seitenwand 27 und leistenförmigen Ansatz 35 bzw. zwischen mittlerer Trennwand 34 und leistenförmigem Ansatz 35 bzw. zwischen rechter Trennwand 34 und Seitenwand 26 des U-förmigen Mehrkammerisolierprofils 31 gehalten. Die freien Längskanten 43 der Trennwände 34 laufen hier, im Unterschied zu den in den Fig. 1 und 2 dargestellten Längskanten 23, 24 und 40 bogenförmig und keilförmig aus. Auch sie arretieren (gemeinsam mit der Rastnase 25 der Seitenwand 26) die Verbindungsschienen 41 im Mehrkammerisolierprofil 31. Die leistenförmigen Ansätze 35 sind an ihrem freien Ende abgeschrägt, wodurch bei der Montage das Einführen der Verbindungsschienen 41 erleichtert wird.

## Patentansprüche

1. Verbindungsschienenblock zur Verbindung gleichphasiger elektrischer Installationsgeräte von Mehrphasenstromkreisen, welche Installationsgeräte in einer Verteilung nebeneinander aufgereiht sind, mit je einer Verbindungschiene (12, 13; 36, 37) pro Phase, an der Anschlußfahnen (15, 16, 17) angeformt sind, mit denen die einzelnen Verbindungsschienen mit den Installationsgeräten der zugehörigen Phase verbindbar sind, mit einem Mehrkammerisolierprofil (11, 31), in dessen Kammern, die durch senkrecht am Boden des Isolierprofils angeformte Trennwände (19, 20; 33) begrenzt sind, die einzelnen Verbindungsschienen eingesetzt sind, wobei die senkrecht abgewinkelten Anschlußfahnen aus den Kammern herausragen, dadurch gekennzeichnet, daß jede Trennwand (19, 20; 33) als Einfachwand ausgebildet und im Querschnitt so geformt ist, daß der Abstand der je eine Trennwand zwischen sich nehmenden, die Trennwand gerade beidseitig berührenden, senkrecht zu dem Boden verlaufenden Ebenen größer ist als die Wandstärke jeder Trennwand, dergestalt, daß die Verbindungsschienen (12, 13, 14; 36, 37, 41) auf einen Abstand zueinander gehalten sind, der größer ist als die Wandstärke jeder Trennwand (Fig. 1, 2).

2. Verbindungsschienenblock nach Anspruch 1, dadurch gekennzeichnet, daß die freie Längskante (23, 24, 40) jeder Trennwand (19, 20, 33) hakenförmigen Querschnitt besitzt und das Hakenende wenigstens teilweise auf der nach außen weisenden Schmalseite einer Verbindungsschiene (12, 13, 14, 36, 37) — diese in ihrer Lage festhaltend — aufliegt.

3. Verbindungsschienenblock nach den Ansprüchen 1 und 2, dadurch gekennzeichnet, daß jede Trennwand (19, 20) zwei senkrecht zum Boden (18) des Isolierprofils ausgerichtete, zueinander versetzte Wandbereiche aufweist, die durch einen Schrägsteg (21, 22) miteinander verbunden sind (Fig. 1).

4. Verbindungsschienenblock nach den Ansprüchen 1 und 2, dadurch gekennzeichnet, daß die Trennwände (33) einen wellen- oder zickzackförmigen Querschnitt aufweisen.

5. Verbindungsschienenblock zur Verbindung gleichphasiger elektrischer Installationsgeräte von Mehrphasenstromkreisen, welche Installationsgeräte in einer Verteilung nebeneinander aufgereiht sind, mit je einer Verbindungsschiene (41) pro Phase, an der Anschlußfahnen (15) angeformt sind, mit denen die einzelnen Verbindungsschienen (41) mit den Installationsgeräten der zugehörigen Phase verbindbar sind, mit einem Mehrkammerisolierprofil (31), in dessen Kammern, die durch senkrecht am Boden (32) des Isolierprofils angeformte Trennwände (34) begrenzt sind, die einzelnen Verbindungsschienen (41) eingesetzt sind, wobei die abgewinkelten Anschlußfahnen aus den Kammern herausragen, dadurch gekennzeichnet, daß am Boden (32) des Isolierprofils zwischen dessen Seitenwänden (26, 27) ebene Trennwände (34) alternierend mit niedrigen leistenförmigen Ansätzen (35) angeformt sind, daß über den Querschnitt des Isolierprofils gesehen die Verbindungsschienen entweder zwischen der ersten Seitenwand (27) und einem leistenförmigen Ansatz (35), einer Trennwand (34) und einem leistenförmigen Ansatz (35) oder einer Trennwand (34) und der zweiten Seitenwand (26) derart isoliert geführt sind, daß sie zu benachbarten Verbindungsschienen auf einem Abstand gehalten sind, der größer ist als die Wandstärke der Trennwände, und daß die freie Längskante (43) jeder Trennwand (34) hakenförmigen Querschnitt besitzt und das Hakenende wenigstens teilweise auf der nach außen weisenden Schmalseite einer Verbindungsschiene (41) — diese in ihrer Lage festhaltend — aufliegt (Fig. 3).

6. Verbindungsschienenblock nach Anspruch 5, dadurch gekennzeichnet, daß die Stirnfläche jedes leistenförmigen Ansatzes (35) zu der von ihm geführten Verbindungsschiene (41) hin abgeschrägt ist.

7. Verbindungsschienenblock nach einem der vorigen Ansprüche, dadurch gekennzeichnet, daß die freie Längskante (23, 24, 40, 43) jeder Trennwand (19, 20, 33, 34) keilförmigen Querschnitt besitzt.

8. Verbindungsschienenblock nach einem der Ansprüche 2 bis 7, dadurch gekennzeichnet, daß die freien Längskanten mit hakenförmigem Querschnitt (23, 24, 40, 43) auf jeder Trennwand (19, 20, 33, 34) durchgehend ausgebildet sind, so daß das Hakenende nicht nur auf der nach außen weisenden Schmalseite der Verbindungsschiene (12, 13, 14, 36, 37, 41) aufliegt, sondern auch seitlich gegen die Anschlußfahnen (15, 16, 17) im Bereich (42) von deren Anformung an die Verbindungsschiene (12, 13, 14, 36, 37, 41) drückt, und so eine Führung und Halterung auch im Bereich der Anschlußfahne (15, 16, 17) bewirkt.

**Claims**

1. Connecting bar block for connecting equi-phase electrical installation units of polyphase current circuits, which installation units are lined up next to one another in distributed manner, having one connecting bar (12, 13; 36, 37) each per phase on which terminal lugs (15, 16, 17) are integrally formed, by means of which the individual connecting bars can be connected to the installation units of the pertinent phase, having a multichamber insulating section (11, 31), in the chambers of which, terminated by dividing walls (19, 20; 33) integrally formed perpendicularly on the base of the insulating section, the individual connecting bars are inserted, with the perpendicularly bent terminal lugs projecting out of the chambers, characterised in that each dividing wall (19, 20; 33) is made as a single wall and is formed in cross section such that the distance between the planes which accommodate between them one dividing wall each, just touch the dividing wall on both sides and run perpendicularly to the base is greater than the wall thickness of each dividing wall in such a way that the connecting bars (12, 13, 14; 36, 37, 41) are held at a distance from one another which is greater than the wall thickness of each dividing wall (Fig. 1 and 2).

2. Connecting bar block according to Claim 1, characterised in that the free longitudinal edge (23, 24, 40) of each dividing wall (19, 20, 33) has a hook-shaped cross section and the hook end at least partially sits on the outwardly pointing narrow side of a connecting bar (12, 13, 14, 36, 37) — holding the latter firmly in its position.

3. Connecting bar block according to Claims 1 and 2, characterised in that each dividing wall (19, 20) has two wall areas which are aligned perpendicularly to the base (18) of the insulating section, are offset relative to one another and are connected by a diagonal web (21, 22) (Fig. 1).

4. Connecting bar block according to Claims 1 and 2, characterised in that the dividing walls (33) have a wave shaped or zig-zag shaped cross section.

5. Connecting bar block for connecting equi-phase electrical installation units of polyphase current circuits, which installation units are lined up next to one another in distributed manner, having one connecting bar (41) each per phase on which terminal lugs (15) are integrally formed, by means of which the individual connecting bars (41) can be connected to the installation units of the pertinent phase, having a multichamber insulating section (31), in the chambers of which, terminated by dividing walls (34) integrally formed perpendicularly on the base (32) of the insulating section, the individual connecting bars (41) are inserted, with the bent terminal lugs projecting out of the chambers characterised in that flat dividing walls (34) are integrally formed, in alternatiig manner with low strip-shaped extensions (35), on the base (32) of the insulating section between the side walls (26, 27) of the latter, that, as viewed over the cross section of the insulating section, the connecting bars are guided in insulating manner either between the first side wall (27) and a strip shaped extension (35), a dividing wall (34) and a strip shaped extension (35) or a dividing wall (34) and the second side wall (26) in such a way that they are held at a distance from adjacent connecting bars, which distance is greater than the wall thickness of the dividing walls, and that the free longitudinal edge (43) of each dividing wall (34) has a hook shaped cross section and the hook end at least pertially sits on the outwardly pointing narrow side of a connecting bar (41) — holding the latter firmly in its position (Fig. 3).

6. Connecting bar block according to Claim 5, characterised in that the end face of each strip shaped extension (35) is bevelled towards the connecting bar (41) which it guides.

7. Connecting bar block according to one of the preceding claims, characterised in that the free longitudinal edge (23, 24, 40, 43) of each dividing wall (19, 20, 33, 34) has a wedge shaped cross section.

8. Connecting bar block according to one of Claims 2 to 7, characterised in that the free longitudinal edges are continuously made with hook shaped cross section (23, 24, 40, 43) on each dividing wall (19, 20, 33, 34), so that the hooked end not only sits on the outwardly pointing narrow side of the connecting bar (12, 13, 14, 36, 37, 41) but also presses laterally against the terminal lugs (15, 16, 17) in the area (42) where they are integrally formed onto the connecting bar (12, 13, 14, 36, 37, 41) and thus bring about guidance and retention also in the area of the terminal lugs (15, 16, 17).

**Revendications**

1. Bloc de barres de connexion pour relier des appareils électiques d'installation de même phase de circuits polyphasés, lesquels appareils sont juxtaposés dans une système de distribution, avec une barre de connexion (12, 13; 36, 37) par phase, sur laquelle sont formées des cosses de jonction (15, 16, 17) qui permettent de relier les différentes barres de connexion aux appareils d'installation de le phase correspondante, et avec un profilé isolant (11, 31) à compartiments multiples délimités par des parois séparatrices (19, 20; 33) formées perpendiculairement sur le fond du profilé isolant, compartiments dans lesquels sont insérées les différentes barres de connexion, les cosses de jonction coudées à angle droit faisant saillie hors des compartiments, caractérisé par le fait que chaque paroi séparatrice (19, 20; 33) est conçue comme une paroi simple et présente une section de forme telle que la distance entre deux plans s'étendant perpendiculairement au fond de chaque côté d'une paroi séparatrice en étant positionnés à des points de contact extrêmes avec cette paroi séparatrice, soit supérieure à l'épaisseur de paroi de chaque paroi séparatrice, de sorte que les barres de connexion (12, 13, 14; 36, 37, 41) sont maintenues à une distance les unes des autres qui est supérieure à l'épaisseur de paroi de chaque paroi séparatrice (figures 1, 2).

2. Bloc de barres de connexion selon la revendication 1, caractérisé par le fait que le bord longitudinal libre (23, 24, 40) chaque paroi séparatrice (19, 20, 33) présente une section en forme de crochet, et que l'extrémité du crochet s'appuie au moins partiellement sur le côté étroit, orienté vers l'extérieur, d'une barre de connexion (12, 13, 14, 36, 37), fixant ainsi cette dernière dans sa position.

3. Bloc de barres de connexion selon les revendications 1 et 2, caractérisé par le fait que chaque paroi séparatrice (19, 20) présente deux parties de paroi décalées l'une par rapport à l'autre, s'étendant perpendiculairement au fond (18) du profilé isolant, et réunies par une partie de liaison oblique (21, 22) (figure 1).

4. Bloc de barres de connexion selon les revendications 1 et 2, caractérisé par le fait que les parois séparatrices (33) présentent une section ondulée ou en zigzag.

5. Bloc de barres de connexion pour relier des appareils électriques d'installation de même phase de circuits polyphasés, lesquels appareils sont juxtaposés dans un système de distribution, avec une barre de connexion (41) par phase, sur laquelle sont formées des cosses de jonction (15) qui permettent de relier les différentes barres de connexion (41) aux appareils d'installation de la phase correspondante, et avec un profilé isolant (31) à compartiments multiples délimités par des parois séparatrices (34) formées perpendiculairement sur le fond (32) du profilé isolant, compartiments dans lesquels sont insérées les différentes barres de connexion (41), les cosses de jonction coudées à angle droit faisant saillie hors des compartiments, caractérisé par le fait que sur le fond (32) du profilé isolant sont formées en alternance, entre les parois latérales (26, 27) de ce profilé, des parois séparatrices planes (34) et des épaulements de faible hauteur (35) en forme de nervure, que, en vue sur la section du profilé isolant, les barres de connexion sont guidées, en étant isolées, soit entre la première paroi latérale (27) et un épaulement en forme de nervure (35), soit entre une paroi séparatrice (34) et un épaulement en forme de nervure (35), soit entre une paroi séparatrice (34) et la deuxième paroi latérale (26), de manière qu'elles soient maintenues vis-à-vis des barres de connexion voisines à une distance qui est supérieure à l'épaisseur de paroi des parois séparatrices, et que le bord longitudinal libre (43) de chaque paroi séparatrice (34) présente une section en forme de crochet, l'extrémité du crochet s'appuyant au moins partiellement sur le côté étroit, orienté vers l'extérieur, d'une barre de connexion (41), fixant ainsi cette dernière dans sa position (figure 3).

6. Bloc de barres de connexion selon la revendication 5, caractérisé par le fait que la face terminale de chaque épaulement en forme de nervure (35) est biseautée vers la barre de connexion (41) que cet épaulement guide.

7. Bloc de barres de connexion selon l'une des revendications précédentes, caractérisé par le fait que le bord longitudinal libre (23, 24, 40, 43) de chaque paroi séparatrice (19, 20, 33, 34) présente une section en forme de coin.

8. Bloc de barres de connexion selon l'une des revendications 2 à 7, caractérisé par le fait que les bords longitudinaux libres à section en forme de crochet (23, 24, 40, 43) sont réalisés en continu sur chaque paroi séparatrice (19, 20, 33, 34), de sorte que l'extrémité du crochet non seulement s'appuie sur le côté étroit, orienté vers l'extérieur, de la barre de connexion (12, 13, 14, 36, 37, 41), mais également exerce une pression latéralement sur les cosses de jonction (15, 16, 17) dans la région (42) de leur raccordement à la barre de connexion (12, 13, 14, 36, 37, 41), assurant ainsi également un guidage et un maintien au niveau des cosses de jonction (15, 16, 17).

Fig.1

Fig.2

Fig.3